Europäisches Patentamt

European Patent Office

Office européen des brevets

(11) Numéro de publication : **0 025 726**
**B1**

# FASCICULE DE BREVET EUROPÉEN

(45) Date de publication du fascicule du brevet :
16.02.83

(51) Int. Cl.³ : **F 28 B 1/06**, F 28 C 1/00

(21) Numéro de dépôt : **80401070.0**

(22) Date de dépôt : **17.07.80**

(54) **Installation perfectionnée de mise en contact d'un fluide avec un gaz.**

(30) Priorité : 03.09.79 FR 7921986

(43) Date de publication de la demande :
25.03.81 Bulletin 81/12

(45) Mention de la délivrance du brevet :
16.02.83 Bulletin 83/07

(84) Etats contractants désignés :
AT BE CH DE GB IT LI LU NL SE

(56) Documents cités :
US A 2 689 613
US A 2 984 991
US A 3 208 534
US A 3 246 432
US A 3 894 127

(73) Titulaire : HAMON-SOBELCO S.A. Société dite:
50-58, Rue Capouillet
B-1060 Bruxelles (BE)

(72) Inventeur : Bosne, Jacques Georges Paul Eugène
5 Rue des Sables
F-78000 Viroflay (FR)
Inventeur : Chofflet, Christian Albert André
3 Rue Larochelle
F-75014 Paris (FR)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France

Installation perfectionnée de mise en contact d'un fluide avec un gaz

La présente invention concerne une installation de mise en contact d'un fluide avec un gaz.

De telles installations sont notamment utilisées pour la réfrigération d'un fluide, par exemple de l'eau, par l'air atmosphérique. Elles comprennent alors un corps d'échange thermique, placé dans une enceinte pourvue d'ouvertures d'entrée et de sortie d'air, et dans lequel l'eau à refroidir est mise directement ou indirectement en contact avec l'air atmosphérique. Dans le cas d'une mise en contact indirecte, le corps est constitué de batteries de tubes parallèles horizontaux ou verticaux dans lesquels circule l'eau à refroidir, tandis que l'air atmosphérique traverse les batteries à travers les intervalles ménagés entre les tubes. Dans le cas d'une mise en contact directe de l'eau avec l'air atmosphérique, l'eau est amenée par un réseau de distribution au-dessus du corps d'échange thermique. Celui-ci peut être réalisé, soit sous forme d'un ensemble de plaques le long desquelles l'eau ruisselle sous forme de pellicules minces, soit sous forme d'un ensemble de surfaces qui assure la dispersion de l'eau en très fines gouttelettes de manière à former un brouillard que traverse le courant d'air atmosphérique.

Ces corps d'échange sont généralement réalisés en matières plastiques tels que le polystyrène, l'ABS, le polyéthylène, le polypropylène ou le chlorure de polyvinyle. Toutes ces matières sont à base de carbone et d'hydrogène et brûlent plus ou moins facilement. Si, dans le cas de réfrigérants atmosphériques, les dangers d'inflammation du corps d'échange sont insignifiants lorsque le réfrigérants est alimenté en eau, il n'en va pas de même lorsqu'il est arrêté et purgé. En outre, dans le cas de réfrigérants atmosphériques, ou plus généralement d'installations de mise en contact d'un liquide avec un gaz dans lesquelles le fluide à refroidir ou à mettre en contact avec le gaz n'est pas de l'eau, des possibilités d'inflammation peuvent subsister même lorsque l'installation est en fonctionnement. Il est donc essentiel d'empêcher une inflammation généralisée du corps d'échange thermique qui provoquerait des dommages irréparables à l'installation et, dans le cas où ce corps est en chlorure de polyvinyle, un dégagement de composés chlorés fortement toxiques.

On a déjà proposé, par exemple dans le brevet US-A-3 208 534, de protéger les installations de mise en contact d'un fluide avec un gaz, par des pulvérisations d'eau commandées par des moyens sensibles à la température et susceptibles de détecter la présence d'un feu.

L'invention vise à réaliser une installation de mise en contact d'un liquide avec un gaz, du type dans laquelle le corps de mise en contact du fluide avec le gaz est suspendu à une ossature à l'intérieur de l'enceinte comme décrit, par exemple, dans les brevets français n° 2 405 451, 2 412 047 et 1 408 931, qui permette d'éviter qu'une inflammation du corps de mise en contact ne se propage au reste de l'installation et, dans le cas où le corps présente une structure particulière appropriée, d'empêcher l'inflammation généralisée de celui-ci.

A cet effet, l'invention a pour objet une installation de mise en contact d'un fluide avec un gaz, comprenant une enceinte pourvue à la partie inférieure de sa périphérie d'au moins une ouverture d'entrée du gaz et à sa partie supérieure d'au moins une ouverture d'évacuation du gaz et un corps de mise en contact du fluide avec le gaz en un ¬atériau combustible, ledit corps étant dispc dans l'enceinte au-dessus de l'ouverture d'ec..ée du gaz et étant suspendu à une ossature par des moyens d'accrochage, caractérisé en ce que lesdits moyens d'accrochage comprennent des moyens sensibles à la température adaptés pour provoquer la rupture desdits moyens d'accrochage en réponse à la détection d'une température prédéterminée au plus égale à la température d'inflammation du corps de mise en contact. Grâce à cet agencement, si un début d'incendie se produit dans le corps de mise en contact, les moyens sensibles à la température provoquent le décrochage de celui-ci qui tombe sur le sol de l'enceinte. Comme les équipements sensibles de l'installation sont généralement situés à une hauteur importante au-dessus du sol, les flammes de ce corps en combustion ne peuvent pas atteindre ces équipements. En outre, dans le cas où l'installation est un réfrigérant atmosphérique dans lequel de l'eau à refroidir est mise en contact directement avec l'air atmosphérique, il est équipé à sa partie inférieure d'un bassin pour recueillir l'eau refroidie, de sorte qu'en cas de décrochage le corps tombe dans ce bassin dont l'eau contribue à l'extinction.

Suivant une autre caractéristique, dans le cas où le corps de mise en contact est constitué par une série de sous-ensembles suspendus individuellement à l'ossature, les moyens d'accrochage de chaque sous-ensemble comprennent des moyens sensibles à la température tels que définis ci-dessus. Ce mode de réalisation permet aux sous-ensembles de se décrocher individuellement au cas où ils sont enflammés et contribue donc à éviter une inflammation généralisée du corps.

D'autres caractéristiques et avantages de l'invention ressortiront de la description qui va suivre de différents exemples de sa réalisation illustrés par les dessins annexés sur lesquels :

la Figure 1 est une vue schématique en coupe longitudinale d'un réfrigérant atmosphérique à tirage naturel ;

la Figure 2 est une vue en perspective d'un corps d'échange thermique accroché à une ossature par des moyens d'accrochage suivant un mode préféré de réalisation de l'invention ;

la Figure 3 est une vue de détail à plus grande échelle d'une partie des moyens d'accrochage de la Fig. 2 montrant la position qu'occupe cette partie pendant le fonctionnement normal de l'installation ;

la Figure 4 est une vue analogue à la Fig. 3 mais montrant cette partie au moment du décrochage du corps d'échange ;

la Figure 5 est une vue en perspective analogue à la Fig. 2 d'un autre mode de réalisation de l'invention ; et

la Figure 6 est une vue de détail à plus grande échelle d'un détail des moyens d'accrochage de la Fig. 5.

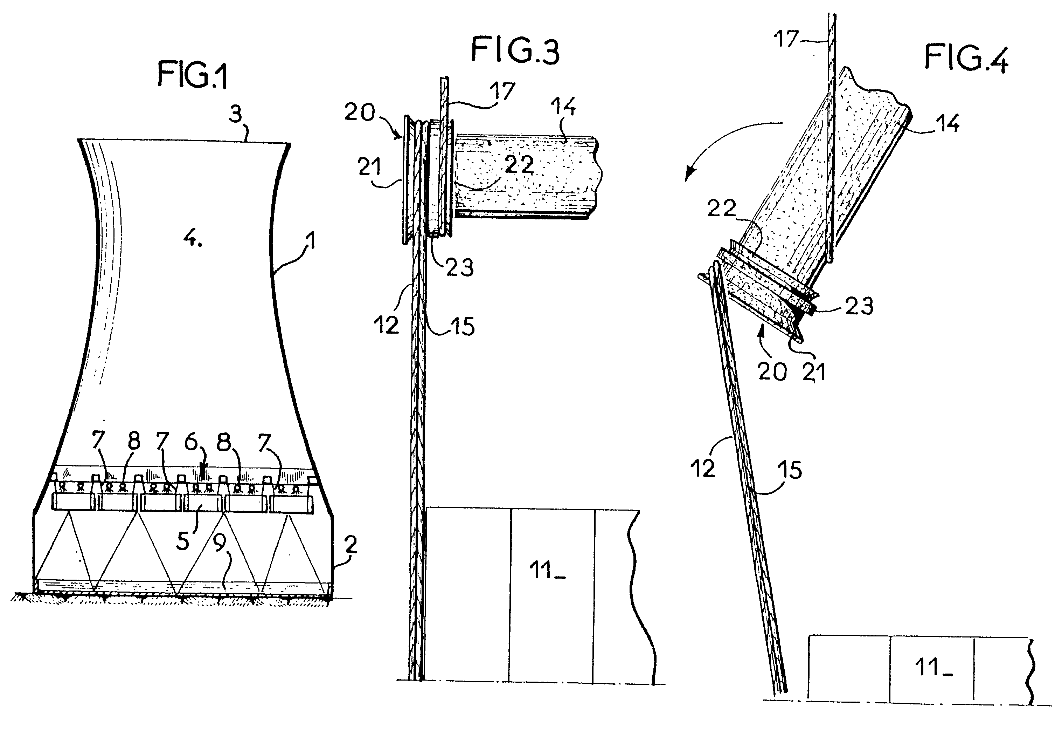

En se référant tout d'abord à la Fig. 1, le réfrigérant atmosphérique représenté comprend un voile 1 de béton formant cheminée pourvu à sa base d'une ouverture périphérique d'entrée d'air 2 et à sa partie supérieure d'une ouverture d'évacuation d'air 3. A l'intérieur de l'enceinte 4 délimité par le voile de béton 1 est placé un corps d'échange thermique 5 suspendu à une ossature 6 par des moyens d'accrochage 7. Dans l'exemple représenté, le corps d'échange thermique 5 du type dans lequel de l'eau est refroidie et mise en contact directement avec l'air atmosphérique, cette eau étant distribuée à la partie supérieure du corps 5 par un réseau de tubes 8. L'eau refroidie tombant en chute libre de la partie inférieure du corps 5 est recueillie dans un bassin 9 s'étendant à la base de l'enceinte 4, sur toute la section de celle-ci. Bien que pour des raisons de simplicité on ait représenté à la Fig. 1 un réfrigérant atmosphérique à mise en contact directe de l'eau avec l'air atmosphérique, il doit être compris que la description qui va suivre n'est pas limitée à ce type de réfrigérant. Elle s'applique en effet également aux réfrigérants à mise en contact indirecte du fluide à refroidir avec l'air atmosphérique dont il a déjà été question précédemment dans le présent mémoire, ainsi qu'aux réfrigérants du type « mixte » comprenant à la fois des corps d'échange à mise en contact indirecte et des corps d'échange à mise en contact directe et aux réfrigérants du type « hybride » qui comprennent des corps d'échange fonctionnant à la fois par contact direct et par contact indirect, comme décrit, par exemple, dans la demande de brevet européen N° 78 400 144.8 (EP-A-10 118). L'invention s'applique également aux réfrigérants à tirage indirect par ventilateurs aspirants ou soufflants.

On se référera maintenant à la Fig. 2 qui montre un corps d'échange 5 constitué d'un certain nombre de sous-ensembles 10. Chaque sous-ensemble 10 est constitué par un groupe de plusieurs blocs 11 en forme de parallélépipède rectangle superposés et espacés verticalement les uns des autres. Ces blocs 11 ont été représentés schématiquement et peuvent revêtir n'importe quelle forme appropriée permettant de mettre en contact direct un liquide projeté à leur partie supérieure avec un gaz qui les pénètre par leur partie inférieure.

Les blocs 11 sont suspendus les uns aux autres au moyen de suspentes 12 constituées par des câbles sans fin passant sur les extrémités de broches 13 fixées horizontalement dans les blocs 11. Dans l'exemple représenté, les blocs 11 sont accrochés les uns aux autres en quatre points disposés symétriquement sur les deux faces latérales opposées les plus longues des blocs. Les quatre suspentes 12 du bloc 11 supérieur sont accrochées aux extrémités respectives de deux pièces 14 constituées par des tubes en matière plastique. Ces tubes 14 s'étendent en croix au-dessus du bloc supérieur 11 et se croisent sensiblement au-dessus du centre de ce bloc. Deux suspentes supplémentaires 15 sont en outre prévues de chaque côté des blocs 11 entre les extrémités respectives des deux tubes 14 adjacentes à ce côté et une broche supplémentaire 16 disposée au milieu de la face latérale la plus longue du bloc 11 inférieur. Ces suspentes supplémentaires 15 sont destinées à empêcher un fléchissement du bloc 11 inférieur, par exemple dans le cas où celui-ci serait pris en glace par temps de gel.

Chaque sous-ensemble 10 est suspendu à l'ossature 6 par quatre suspentes 17 qui sont accrochées chacune respectivement à une extrémité d'un tube 14 et à une broche 18 fixée dans une poutre 19 de l'ossature 6.

La Fig. 3 montre de façon plus détaillée la partie d'extrémité 20 d'un tube 14 à laquelle sont accrochées les suspentes 12, 15 et 17, qui sont toutes constituées d'un câble sans fin. La partie d'extrémité 20 présente la forme d'une bobine présentant un flasque extérieur 21 et un flasque 22 de plus petit diamètre du côté du tube 14. En outre, une collerette annulaire 23 fait saillie sur la partie cylindrique de la bobine entre les flasques 21 et 22. La boucle inférieure de la suspente 17 qui supporte la partie d'extrémité 20 embrasse la partie inférieure de celle-ci entre la collerette 23 et le flasque 22. Les boucles supérieures des suspentes 12 et 15 embrassent la partie supérieure de la partie d'extrémité 20 et sont disposées côte à côte entre le flasque 21 et la collerette 23.

Le fonctionnement de l'agencement suivant l'invention en cas d'inflammation de l'un ou plusieurs des blocs 11 d'un sous-ensemble 10 sera maintenant expliqué en regard des Fig. 2 à 4. Etant donné que les blocs 11 sont pourvus de passages verticaux pour l'eau à refroidir et l'air atmosphérique, en cas d'inflammation de l'un d'eux l'incendie a tendance à se propager beaucoup plus rapidement verticalement au centre d'un sous-ensemble 10 que latéralement. Il en résulte que c'est la partie médiane des tubes 14 où ceux-ci se croisent qui est la plus rapidement soumise à la température élevée due à l'inflammation du sous-ensemble 10, de sorte que ces parties médianes sont simultanément ramollies ou enflammées. Etant donné que la suspente 17 est maintenue par la collerette 23 légèrement écartée vers le milieu des tubes 14 par rapport aux suspentes 12 et 15, le poids du sous-ensembles 10 enflammé exerce un moment qui tend à faire basculer les tubes 14. Lorsque la résistance mécanique de la partie médiane de ceux-ci est devenue suffisamment faible, les tubes 14 se rompent en deux au niveau de leur partie médiane et basculent simultanément de la manière représentée à la Fig. 4. La boucle inférieure de la suspente 17 échappe alors immédiatement à la partie 20 en forme de bobine grâce au fait que le flasque 22 présente un petit diamètre.

Les quatre points d'accrochage du sous-ensemble 10 enflammé se trouvent alors libérés de sorte que celui-ci tombe verticalement vers le bas de l'enceinte 4. On remarquera que, grâce à l'agencement décrit précédemment, les quatre points d'accrochage sont libérés simultanément, ce qui évite tout basculement et tout coincement du sous-ensemble pendant sa chute. Si le sous-ensemble enflammé tombe dans un bassin 9 rempli d'eau, l'extinction est instantanée. Au contraire, si le bassin est vide ou s'il n'est pas prévu de bassin dans le cas où le corps d'échange thermique est du type à contact indirect, le sous-ensemble enflammé peut continuer à brûler au sol. Néanmoins, ceci n'aura généralement pas de conséquence sur les autres sous-ensembles et sur le reste de l'installation car la distance entre le sol et la surface inférieure du corps d'échange thermique est largement supérieure à la hauteur que peuvent atteindre les flammes du sous-ensemble brûlant au sol. A titre d'exemple, pour un corps d'échange présentant une hauteur de deux mètres, les expériences ont montré que les flammes étaient de l'ordre de 3 mètres de haut. Or, pour un corps d'échange de cette hauteur, il est prévu une hauteur entre le sol et la surface inférieure du corps d'échange d'environ 15 mètres, ce qui évite tout risque de propagation de l'incendie.

Bien entendu, pour limiter au maximum les risques de propagation d'incendie, il est préférable de réaliser les tubes 14 en un matériau susceptible de céder à une température nettement inférieure à la température d'inflammation des blocs 11. C'est ainsi que, si les blocs 11 sont réalisés en chlorure de polyvinyle qui est le matériau le plus couramment utilisé pour ce type d'équipement, les tubes 14 peuvent être en polypropylène qui présente une température de fusion voisine de 165 °C, en polyéthylène à haute densité dont la température de fusion est de l'ordre de 130 °C, en Nylon qui présente une température de fusion inférieure à 250 °C, ou en tout autre matériau présentant une température de fusion du même ordre de grandeur.

Avec de tels matériaux, le décrochage des sous-ensembles 10 se produirait donc à une température de l'ordre de 250 °C alors que le point d'auto-inflammation du chlorure de polyvinyle est de l'ordre de 750 °C. Ceci permet donc d'éviter une inflammation généralisée du corps d'échange même si un foyer local a été allumé par inadvertance ou malveillance, car le ou au maximum les quelques sous-ensembles enflammés par ce foyer se décrocheront avant que les sous-ensembles voisins aient pu être enflammés à leur tour du fait de la propagation verticale préférentielle de l'incendie.

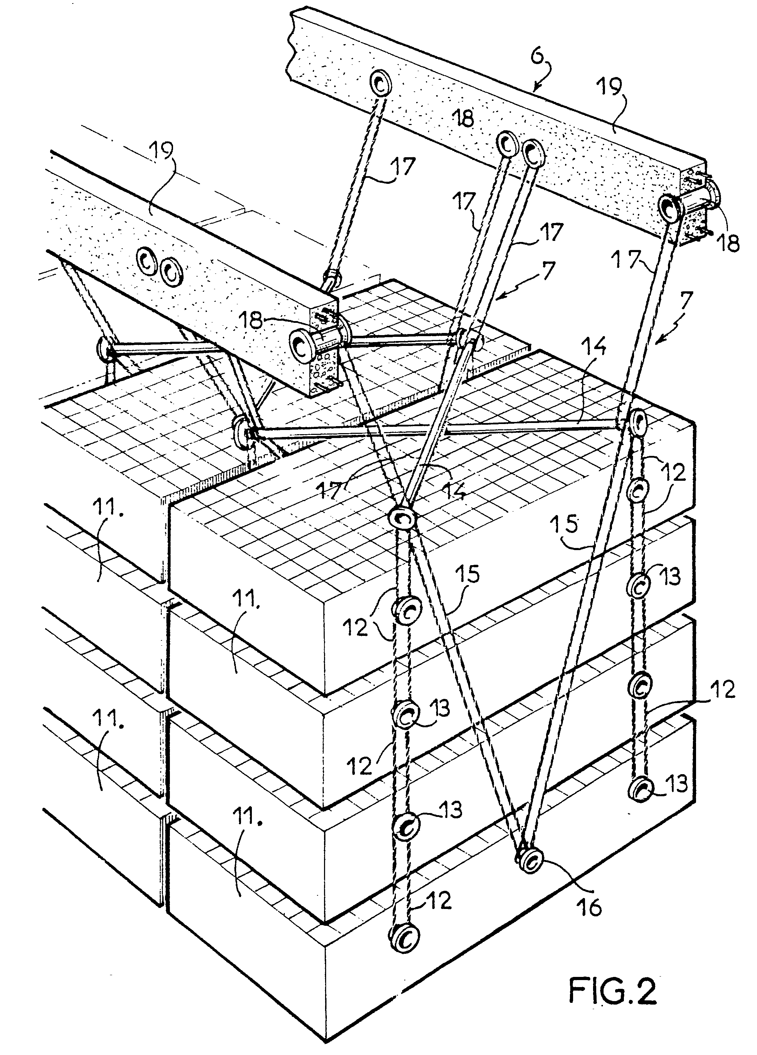

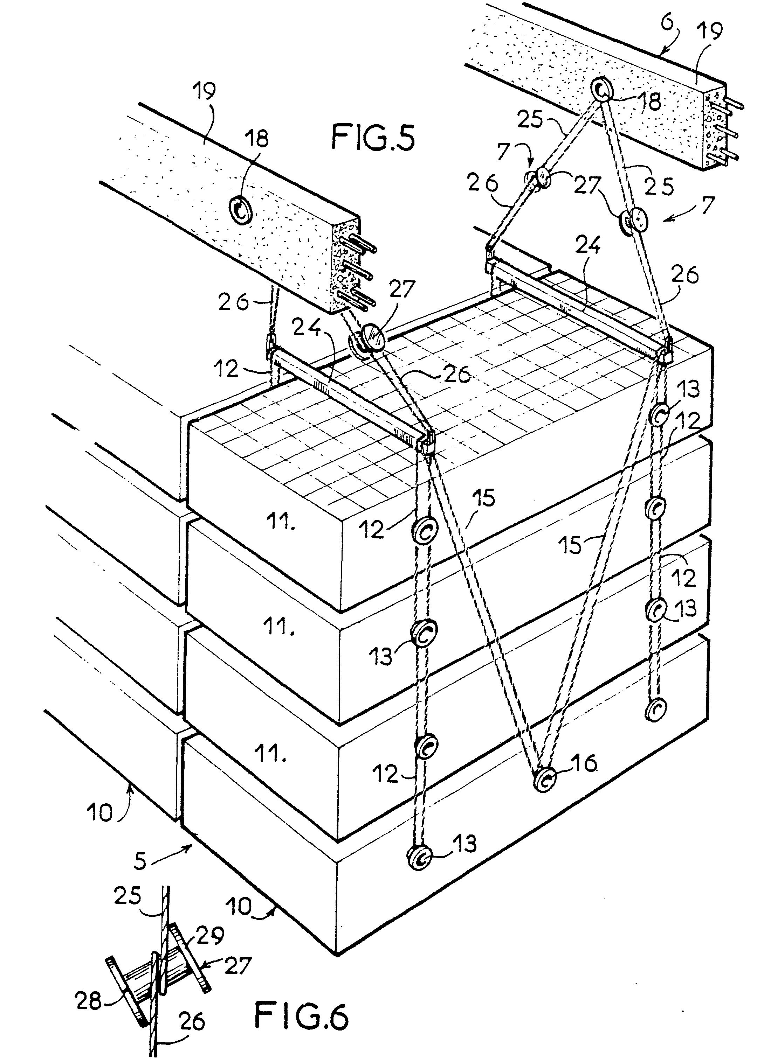

On se reportera maintenant aux Fig. 5 et 6 qui montrent un mode de réalisation simplifié de l'invention. Dans cet exemple, le mode d'accrochage des blocs 11 d'un sous-ensemble 10 les uns aux autres est identique à celui de la Fig. 2. Les boucles supérieures des suspentes 12 du bloc 11 supérieur par lequel chaque sous-ensemble 10 est suspendu embrassent les extrémités respectives de deux barres 24 s'étendant transversalement, c'est-à-dire parallèlement aux petits côtés des blocs 11, entre les grands côtés de ces derniers. Ces barres 24 n'ont pas de rôle particulier à jouer en cas d'incendie et peuvent donc être réalisés par exemple en métal. Les moyens d'accrochage 7 qui relient chaque extrémité des barres 24 à la poutre correspondante 19 comprennent deux suspentes 25 et 26 constituées par des câbles sans fin. Les boucles supérieures des deux suspentes 25 associées à une même barre 24 sont accrochées à une broche commune 18 disposée à la verticale du milieu de la barre 24 en question. Les boucles inférieures des suspentes inférieures 26 sont accrochées aux extrémités respectives des barres 24 par tout moyen approprié, par exemple au moyen d'anneaux fixés aux extrémités de ces barres. La boucle inférieure de la suspente 25 et la boucle supérieure de la suspente 26 de chacun des moyens d'accrochage 7 sont liées entre elles par une pièce 27 en forme de bobine représentée plus en détail à la Fig. 6. Cette bobine présente une dimension axiale largement supérieure à l'encombrement axial que présentent les boucles précitées sur la bobine et les diamètres des flasques 28 et 29 de celle-ci sont relativement importants de sorte que, comme représenté sur la Fig. 6, dans la position suspendue d'un sous-ensemble 10, la bobine 27 prend une position oblique dans laquelle les suspentes 25 et 26 ont tendance à échapper à la bobine mais sont retenues par les flasques de celle-ci. Les bobines 27 sont réalisées dans l'un des matériaux précités présentant une température de fusion relativement basse, de sorte qu'en cas d'élévation de la température due à une inflammation les flasques 28 soumis à la contrainte des suspentes 25 et 26 se déforment et permettent à celle-ci d'échapper à la bobine 27, ce qui permet au sous-ensemble 10 concerné de tomber. Si, du fait de la position latérale des bobines 27 par rapport au sous-ensemble 10, cet agencement ne permet pas d'assurer la libération simultanée des quatre points d'accrochage d'un sous-ensemble 10 avec autant de certitude que dans le premier mode de réalisation, il a l'avantage sur ce dernier de ne nécessiter que deux broches 18 par sous-ensemble 10, ce qui simplifie le montage et réduit le coût du corps d'échange.

Bien entendu, de nombreuses modifications peuvent être apportées aux modes de réalisation décrits ci-dessus sans sortir du cadre de l'invention. C'est ainsi que, dans l'exemple des Fig. 5 et 6, les barres 24 et les suspentes 26 pourraient être supprimées, les suspentes supérieures 12 étant alors accrochées directement aux bobines 27. Toutefois, les suspentes 12 prendraient alors appui contre le bord supérieur du bloc supérieur 11 et auraient tendance à cisailler celui-ci. Cet inconvénient pourrait naturellement être évité en prévoyant une broche 18 sur chaque poutre 19 à la verticale des grands côtés des blocs 11 ou en disposant le point d'accrochage des suspentes 12 supérieures sur le bloc 11 supérieur au voisinage du bord supérieur de celui-ci. Dans l'exemple des Fig. 5 et 6, on pourrait également prévoir deux broches 18 au lieu d'une seule sur chaque poutre 19 et croiser les moyens d'accrochage 7 de manière que les bobines 27 des moyens d'accrochage associés à cette poutre se trouvent au voisinage l'une de l'autre. Cet agencement aurait pour avantage d'accroître la probabilité d'une libération simultanée des quatre points d'accrochage du sous-ensemble 10. Un effet équivalent pourrait être obtenu en disposant les tubes 14 du mode de réalisation de la Fig. 2, non plus obliquement, mais transversalement, c'est-à-dire comme les barres 24. Cette disposition serait cependant moins avantageuse que celle représentée à la Fig. 2 car les deux tubes 14 pourraient céder avec un léger décalage dans le temps.

On remarquera enfin que l'invention n'est pas limitée à l'utilisation de pièces de liaison entre les suspentes en un matériau cédant en cas d'inflammation, mais que les moyens d'accrochage 7 pourraient être constitués par de simples suspentes en un tel matériau accrochées directement aux poutres 19 et au sous-ensemble 10. Plus généralement encore, n'importe quels moyens sensibles à la température et adaptés pour provoquer la rupture des moyens d'accrochage 7 en réponse à la détection d'une température anormalement élevée peuvent être utilisés.

**Revendications**

1. Installation de mise en contact d'un fluide avec un gaz, comprenant une enceinte (4) pourvue à la partie inférieure de sa périphérie d'au moins une ouverture d'entrée du gaz et à sa partie supérieure d'au moins une ouverture d'évacuation du gaz, et un corps de mise en contact (5) du fluide avec le gaz en un matériau combustible, ledit corps étant disposé dans l'enceinte au-dessus de l'ouverture d'entrée du gaz et étant suspendu à une ossature (6) par des moyens d'accrochage (7), caractérisée en ce que lesdits moyens d'accrochage (7) comprennent des moyens sensibles à la température (14, 27) adaptés pour provoquer la rupture desdits moyens d'accrochage (7) en réponse à la détection d'une température prédéterminée au plus égale à la température d'inflammation du corps de mise en contact (5).

2. Installation de mise en contact suivant la revendication 1, dans laquelle ledit corps de mise en contact (5) est constitué par une série de sous-ensembles (10) suspendus individuellement à l'ossature (6), caractérisée en ce que les moyens d'accrochage (7) de chaque sous-ensemble (10) comprennent des moyens sensibles à la température (14, 27).

3. Installation suivant l'une quelconque des revendications 1 et 2, caractérisée en ce que lesdits moyens d'accrochage (7) comprennent des premières suspentes (17 ; 25) accrochées à l'ossature (6) et des secondes suspentes (12, 26) accrochées audit corps, lesdites secondes suspentes (12 ; 26) étant accrochées auxdites premières suspentes (17 ; 25) par lesdits moyens sensibles à la température (14 ; 27).

4. Installation suivant la revendication 3, caractérisée en ce que lesdits moyens sensibles à la température (14 ; 27) sont constitués par des pièces déformables mécaniquement à ladite température prédéterminée et conformées de manière à assurer la libération des secondes suspentes (12 ; 26) en réponse à leur déformation sous l'effet de ladite température et du poids dudit corps (5).

5. Installation suivant les revendications 2 et 4 prises ensembles, caractérisée en ce que lesdites pièces sont constituées par des tubes (14) s'étendant transversalement au-dessus desdits sous-ensembles, deux tubes (14) au moins étant disposés au-dessus de chaque sous-ensemble (10), lesdites premières et secondes suspentes (12, 17) étant accrochées aux parties d'extrémité (20) des tubes (14).

6. Installation suivant la revendication 5, caractérisée en ce que lesdites parties d'extrémité (20) des tubes présentent chacune la forme d'une bobine pourvue d'un flasque extérieur (21) à l'extrémité du tube, d'un flasque intérieur (22) du côté du tube (14) et d'une collerette annulaire (23) entre lesdits flasques (21, 22), les premières suspentes (17) étant accrochées aux parties d'extrémité (20) entre le flasque intérieur (22) et la collerette annulaire (23) et les secondes suspentes (12) étant accrochées aux parties d'extrémité (20) entre le flasque extérieur (21) et la collerette annulaire (23).

7. Installation suivant l'une quelconque des revendications 5 et 6, caractérisée en ce que lesdits deux tubes sont disposés obliquement au-dessus de chaque sous-ensemble (10) et sont agencés de manière à se croiser sensiblement à la verticale du centre dudit sous-ensemble.

8. Installation suivant la revendication 4, caractérisée en ce que lesdites pièces sont constituées par des bobines (27) reliant chacune une première suspente (25) à une seconde suspente (26).

9. Installation de mise en contact d'un fluide avec un gaz, comprenant une enceinte (4) pourvue à la partie inférieure de sa périphérie d'au moins une ouverture d'entrée du gaz et à sa partie supérieure d'au moins une ouverture d'évacuation du gaz, et un corps de mise en contact (5) du fluide avec le gaz en un matériau combustible, ledit corps étant disposé dans l'enceinte au-dessus de l'ouverture d'entrée du gaz et étant suspendu à une ossature (6) par des moyens d'accrochage (7), caractérisée en ce que lesdits moyens d'accrochage (7) sont constitués par des suspentes accrochées respectivement audit corps (5) et à ladite ossature (6) et sont réalisés en un matériau cédant en cas d'inflammation.

## Claims

1. An installation for putting a fluid in contact with a gas, comprising an enclosure (4) provided in the lower part of its periphery with at least one gas inlet opening and in its upper part with at least one gas discharge opening, and a unit (5) for putting the fluid in contact with the gas and composed of a combustible material, said unit being disposed in the enclosure above the gas inlet opening and being suspended from a framework (6) by hooking means (7), characterized in that said hooking means (7) comprise temperature responsive means (14 ; 27) adapted to cause the breakage of said hooking means (7) in response to the detection of a predetermined temperature at the most equal to the temperature of inflammation of the contact unit (5).

2. An installation as claimed in claim 1, wherein said contact unit (5) is formed by a series of sub-assemblies (10) which are individually suspended from the framework (6), characterized in that the hooking means (7) of each sub-assembly (10) comprise temperature responsive means (14 ; 27).

3. An installation as claimed in claim 1 or 2, characterized in that said hooking means (7) comprise first suspension members (17 ; 25) hooked to the framework (6) and second suspension members (12 ; 26) hooked to said unit, said second suspension members (12 ; 26) being hooked to said first suspension members (17 ; 25) by said temperature responsive means (14 ; 27).

4. An installation as claimed in claim 3, characterized in that said temperature responsive means (14 ; 27) are formed by members which are mechanically deformable at said predetermined temperature and shaped in such manner as to ensure the release of the second suspension members (12 ; 26) as a result of their deformation under the effect of said temperature and the weight of said unit (5).

5. An installation as claimed in claims 2 and 4 in combination, characterized in that said members are formed by tubes (14) which extend transversely over said sub-assemblies, at least two tubes (14) being disposed above each sub-assembly (10), said first and second suspension members (12, 17) being hooked to the end parts (20) of the tubes (14).

6. An installation as claimed in claim 5, characterized in that said end parts (20) of the tubes each have the shape of a reel provided with an outer cheek (21) at the end of the tubes, an inner cheek (22) adjacent the tube (14) and an annular flange (23) located between said cheeks (21, 22), the first suspension members (17) being hooked to the end parts (20) between the inner cheek (22) and the annular flange (23) and the second suspension members (12) being hooked to the end parts (20) between the outer cheek (21) and the annular flange (23).

7. An installation as claimed in claim 5 or 6, characterized in that said two tubes are disposed obliquely above each sub-assembly (10) and are arranged in such manner as to cross each other substantially vertically above the centre of said sub-assembly.

8. An installation as claimed in claim 4, characterized in that said members are formed by reels (24), each of which connects a first suspension member (25) to a second suspension member (26).

9. An installation for putting a fluid in contact with a gas, comprising an enclosure (4) provided in the lower part of its periphery with at least one gas inlet opening and in its upper part with at least one gas discharge opening, and a unit (5) for putting the fluid in contact with the gas and composed of a combustible material, said unit being disposed in the enclosure above the gas inlet opening and being suspended from a framework (6) by hooking means (7), characterized in that said hooking means (7) are formed by suspension members respectively hooked to said unit (5) and to said framework (6) and made from a material which yields in the case of inflammation.

## Ansprüche

1. Anlage zum Kontaktieren eines Fluids mi einem Gas mit einem Raum (4), der am unteren Teil seiner Peripherie mindestens eine Gaseinlaßöffnung aufweist und an seinem oberen Teil mindestens eine Gasabfuhröffnung besitzt und mit einem Kontaktkörper (5) zum Kontaktieren des Fluids mit dem Gas aus einem verbrennbaren Material, welcher Körper in dem Raum oberhalb der Gaseintrittsöffnung angeordnet ist und an einem Geripppe (6) mittels Verankerungsmitteln (7) aufgehangen ist, dadurch gekennzeichnet, daß die Verankerungsmittel (7) temperaturempfindliche Mittel (14, 27) umfassen, ausgebildet zum Provozieren des Bruches der Verankerungsmittel (7) im Ansprechen auf die Erfassung einer vorgegebenen Temperatur, die mindestens gleich der Entflammungstemperatur des Kontaktkörpers (5) ist.

2. Anlage nach Anspruch 1, bei der der Kontaktkörper (5) von einer Serie von Unterbaugruppen (10) gebildet ist, die einzeln an dem Geripppe (6) aufgehangen sind, dadurch gekennzeichnet, daß die Verriegelungsmittel (7) jeder Unterbaugruppe (10) temperaturempfindliche Mittel (14, 27) umfassen.

3. Anlage nach einem der Ansprüche 1 und 2, dadurch gekennzeichnet, daß die Verankerungsmittel (7) erste Hänger (17, 25) umfassen, die an dem Geripppe (6) verankert sind sowie zweite Hänger (12, 26) umfassen, die an dem Kontaktkörper verankert sind und an den ersten Hängern (17, 25) über die temperaturempfindlichen Mittel (14, 27) verankert sind.

4. Anlage nach Anspruch 3, dadurch gekennzeichnet, daß die temperaturempfindlichen Mittel (14, 27) aus bei der vorgegebenen Temperatur mechanisch deformierbaren Bauteilen bestehen, derart ausgebildet, daß die Freisetzung der zweiten Hänger (12, 26) im Ansprechen auf ihre Deformation unter der Wirkung der Temperatur und des Gewichtes des Kontaktkörpers (5) sichergestellt wird.

5. Anlage nach einem der Ansprüche 2 und 4 gemeinsam, dadurch gekennzeichnet, daß die Bauteile von Rohren (14) gebildet sind, die sich quer oberhalb der Unterbaugruppen erstrecken, wobei mindestens zwei Rohre (14) oberhalb jeder Unterbaugruppe (10) angeordnet sind, wobei die ersten und zweiten Hänger (12, 17) an den Endabschnitten (20) der Rohre (14) verankert sind.

6. Anlage nach Anspruch 5, dadurch gekennzeichnet, daß die Endteile (20) der Rohre jeweils die Form einer Spule aufweisen mit einem äußeren Flansch (21) am Ende des Rohres, mit einem inneren Flansch (22) nach innen zum Rohr (14) hin versetzt und einen ringförmigen Kragen (23) zwischen beiden Flanschen (21) und (22), wobei die ersten Hänger (17) an den Endteilen (20) zwischen innerem Flansch (22) und Ringkragen (23) verankert sind und die zweiten Hänger (12) an den Endabschnitten (20) zwischen dem äußeren Flansch (21) und dem ringförmigen Kragen (23) verankert sind.

7. Anlage nach einem der Ansprüche 5 und 6, dadurch gekennzeichnet, daß die beiden Rohre schräg oberhalb jeder Unterbaugruppe (10) angeordnet und so ausgebildet sind, daß sie sich im wesentlichen in der Vertikale des Zentrums der Unterbaugruppe kreuzen.

8. Anlage nach Anspruch 4, dadurch gekennzeichnet, daß die Bauteile von Spulen (27) gebildet sind, die jeweils einen ersten Hänger (25) mit einem zweiten Hänger (26) verbinden.

9. Anlage zum Inkontaktbringen eines Fluids mit einem Gas mit einem Raum (4), der an seinem unteren Teil peripher mindestens eine Gaseintrittsöffnung aufweist und in seinem oberen Teil mindestens eine Gasabfuhröffnung besitzt sowie mit einem Kontaktkörper (5) zum Kontaktieren des Fluids mit dem Gas aus einem verbrennbaren Material, welcher Kontaktkörper in dem Raum oberhalb der Gaseintrittsöffnung angeordnet ist und an einem Gerippe (6) mittels Verankerungsmitteln (7) aufgehangen ist, dadurch gekennzeichnet, daß die Verankerungsmittel (7) von Hängern gebildet sind, die an dem Kontaktkörper (5) und an dem Gerippe (6) verankert sind und aus einem Material bestehen, das im Falle der Entflammung nachgibt.

FIG.1

FIG.3

FIG.4

3

4.

1

7  8  7  6  8  7

5   9

2

20
21
17
14
22
23
12  15

11_

17
14
22
23
20  21
12  15

11_

0 025 726

FIG.2

0 025 726

FIG.5

FIG.6

3